# EUROPEAN PATENT SPECIFICATION

(11) **EP 4 400 681 B1**
(45) Date of publication and mention of the grant of the patent: **23.04.2025**
(21) Application number: 23151734.3
(22) Date of filing: 16.01.2023
(51) Int. Cl.: E05C 9/22

(54) **ROD GUIDE FOR AN OPENABLE ELEMENT**
STANGENFÜHRUNG FÜR EIN ÖFFNUNGSFÄHIGES ELEMENT
GUIDE-TIGE POUR ÉLÉMENT OUVRANT

(43) Date of publication of application: 17.07.2024
(73) Proprietor: Industrilås I Nässjö AB, 571 23 Nässjö (SE)
(72) Inventor: Pettersson, Magnus, 571 23 Nässjö (SE); Hjertqvist, Eric, 571 23 Nässjö (SE)
(74) Representative: AWA Sweden AB

(56) References cited:
- DE-U1- 202011 005 241
- DE-U1- 9 207 267

## Description

### Technical field

The present invention relates to closing mechanisms of openable elements such as doors or hatches. More specifically it relates to rod guides for rods used as closing mechanism on openable elements.

### Background

Doors, windows, hatches or other openable elements may have a closing mechanism using a rod mounted on the openable element. The rod may be turned around its own axis, or moved axially, as to open or close the door or hatch.

To mount the rod on the openable element rod guides are used to keep the rod in place in connection to the openable element, making it possible for the rod to turn around its axis within the rod guide, and also to move in an axial direction.

Even though the opening/closing movement is turning around the axis of the rod, the rod might also move a little in its radial direction. If the rod guide is static it may induce tension in the rod, which is not favorable in terms of easy use and sustainability of the materials.

Since the openable elements using this type of opening/closing systems are often in environments where robust materials and constructions are needed, there is need for a rod guide that meet these requirements.

An example of a rod guide is given in DE 20 2011 005241 U1, which describes a rod guide for guiding a locking rod. This rod guide enables adjustment of the position of a rod mounted to an openable element.

### Summary

It is an object of the present invention to provide an improved solution that alleviates certain drawbacks with present solutions. Furthermore, it is an object to provide a rod guide enabling an alternative way for adjustment of the position of a rod mounted to an openable element.

The invention is defined by the appended independent claims, with embodiments being set forth in the appended dependent claims, in the following description and in the drawings.

According to a first aspect, there is provided a rod guide for a rod arranged to an openable element, comprising a first part configured to be arranged with a bottom side onto the surface of the openable element, and having at least one recess extending, from an open end of the recess at the bottom side of the first part, in a direction perpendicular to the surface of the openable element, a second part enclosed by the first part and being movable relative to the first part in a direction perpendicular to the surface, and having at least one recess configured to create a receptacle for receiving the rod, wherein the recess of the second part has an open end in a direction in parallel with the surface of the openable element when the rod guide is arranged thereto, and a height adjusting element configured to adjust the position of the second part inside of the first part, wherein when moving the second part by the height adjusting element the rod received in the receptacle of the recess of the second part is moved along the recess of the first part in a direction perpendicular to the openable element.

Contrary to the state of the art, the invention does thus provide that the at least one recess of the first part extends, from an open end of the recess at the bottom side of the first part, and that the recess of the second part has an open end in a direction in parallel with the surface of the openable element when the rod guide is arranged thereto.

The rod may extend along the surface of the openable element through the receptacle of one or more rod guides mounted to the surface of the openable element. When adjusting the position of the second part inside of the first part, the position of the receptacle may be adjusted, and the position of the rod may be adjusted along with the receptacle.

When opening and closing a door, window or other openable element by a mechanism including a rod, the rod may be rotated around its axis, and/or moved axially, so as to open or close the openable element. For a well-functioning opening or closing procedure, it may be useful to have a rod guide to guide the movement of the rod. If the rod guide is static, there may be tension induced in the rod if the rod guide is not oriented in a precise way, making the opening and closing procedure harder and eventually also cause brittleness of the rod over time. An adjustable rod guide may thereby provide a way to configure the rod guide for easy operation of the rod.

The position adjusted may be in the radial direction of the rod. The position adjusted may be moving the rod closer to the surface of the openable element on which the rod guide is arranged, or further away from the surface of the openable element. The position adjusted may be in a direction perpendicular to the surface of the openable element. This makes it possible to adjust the position of the rod in the rod guide according to the position of the rod at the closing mechanism, releasing the tension that might have been induced. The first part may have a flat surface configured to face the surface of the openable element when in use. The first part may be fixed to the surface of the openable element in any way, for instance by means of a fastening means such as one or more screws or rivets, or by gluing or using other adhesive.

The rod guide may be made of plastic or metal such as steel or zinc or any other suitable material.

The rod guide is intended to be used for rods with a diameter of about 0,5 cm to 5 cm.

The receptacle holding the rod, provided by the recess of the first part and the recess of the second part, may limit the movement of the rod in at least two dimensions perpendicular to each other.

When the second part is enclosed by the first part, the recess of the second part is open in a direction perpendicular to the recess of the first part.

The rod may be limited in movement in the radial direction of the rod, and thereby controlled by the movement of the second part. The recess of the second part may move along the recess of the first part, thereby moving the receptacle and the rod. The rod may be rotatable around its own axis within the receptacle. The rod may be movable in an axial direction within the receptacle.

The recess in the first part limits movement of the rod in a direction in parallel with the surface, and the recess in the second part limits movement of the rod in a direction perpendicular to the surface.

The height adjusting element may be configured to be arranged to the second part and extending through the second part in a direction perpendicular to the surface.

The height adjusting element may be axially fixed inside of the first part, when the rod guide is mounted to the surface of the openable element. The surface of the openable element may restrict the movement of the height adjusting element in one direction along the axis of the height adjusting element. The first part may restrict the movement of the height adjusting element in one direction along the axis of the height adjusting element.

Movement of the height adjusting element may be restricted in a radial direction by the first part.

The second part may be moved along the height adjusting element so as to change its position in relation to the surface of the openable element and the first part.

The second part may further comprise at least one through hole, and wherein the height adjusting element may be arranged in the at least one through hole of the second part.

The through hole associated with the height adjusting element may be threaded or may have screw tracks. The through hole through the second part may extend in a direction perpendicular to the surface of the openable element when in use. The through hole in the second part may extend in parallel with the recess of the first part.

The height adjusting element arranged to extend through the second part may further extend through said through hole. The height adjusting element may interact with the through hole to provide adjusting movement of the second part. The height adjusting element may be provided with threads configured to interact with threads of the through hole.

The height adjustable element may be a screw or a bolt, and a nut.

The through hole of the second part may have flat or substantially flat walls, wherein the threads of the nut can be moved along the threads of the screw.

The nut may be integrated with the second part, provided as a threaded portion of the through hole of the second part.

In one embodiment the second part may have a nut receiving space configured to receive a nut, through which the through hole extend. Wherein the nut receiving space may be configured to prevent rotation of a nut received therein relative to the second part. The nut may be arranged in one through hole. The screw may be arranged in the other through hole and passing through the nut so as the threads of the nut may be engaged with the threads of the screw.

The first part may have an opening aligned with one end of the height adjusting element.

The opening of the first part aligned with the height adjusting element may give access to the height adjusting element for adjusting the height of the second part. The adjustment of the height adjusting element may be done by rotating the height adjusting element by hand or by a tool.

In one embodiment the height adjusting element may be a screw and the opening of the first part may align with the drive of the screw. The position of the second part may then be adjusted by screwing the screw in one direction.

The first part may be mounted on the openable element by at least one screw or bolt or other fastening means.

In one embodiment the rod guide may have a mounting arrangement integrated with the first part. In another embodiment there may be flanges extending from the first part for mounting the rod guide to the surface of the openable element.

According to a second aspect, there is provided a method for adjusting the position of a rod in a rod guide according to the invention, the method comprising rotating the height adjusting element, such that the second part is moved inside of the first part in a direction perpendicular to the surface of the openable element.

When rotating the height adjusting element, the second part may be moved together with the height adjusting element. The recess of the second part creating a receptacle for holding the rod may move along the recess of the first part when the height adjusting element is rotated. The receptacle may be moved inside the first part in a radial direction of the rod, closer to or further away from the surface of the openable element. The rod may be moved with the receptacle so as to be closer to or further away from the surface of the openable element. By rotating the height adjusting element in one direction, the rod may be moved closer to the surface of the openable element and by rotating the height adjusting element in a direction opposite to the first, the rod may be moved further away from the surface of the openable element.

According to a third aspect there is provided an openable element comprising a rod and at least one rod guide according to any one of the embodiments of the invention attached to a surface of the openable element, wherein the rod extends through the rod guide.

### Brief description of the drawings

The invention will in the following be described in more detail with reference to the enclosed drawings, wherein:
Fig. 1 schematically illustrates an openable element having a rod being held by a rod guide.
Fig. 2 illustrates a rod guide according to an embodiment, mounted on a surface of an openable element.
Fig. 3 is a cross-section of the rod guide in fig. 2.
Fig. 4 illustrates a first part of the rod guide according to one embodiment.
Fig. 5 illustrates a second part of the rod guide according to one embodiment.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

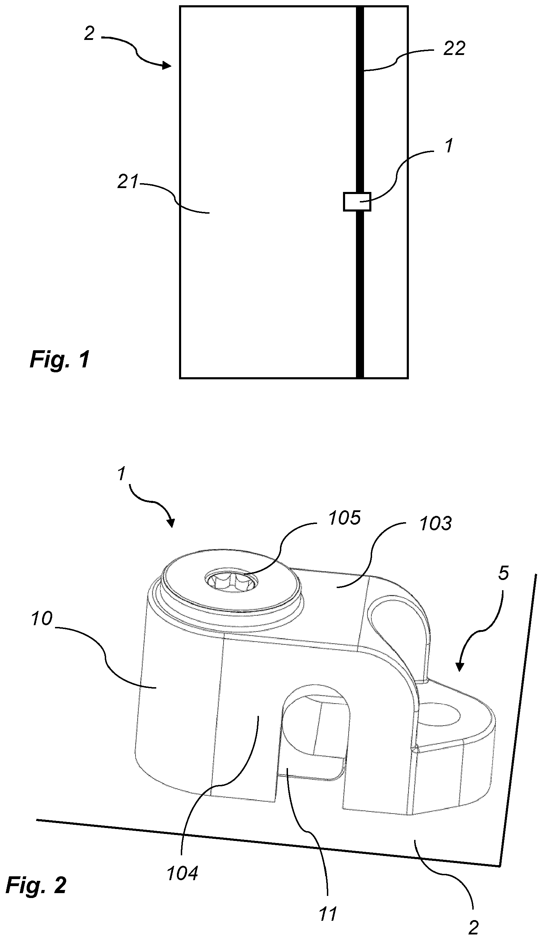

Fig. 1 schematically illustrates an openable element 2 in the form of a door having a rod 22 being held by a rod guide 1. The rod guide 1 is mounted on a surface 21 of the openable element 2. The rod 22 may be held by more than one rod guide 1 mounted on the surface 21. The rod 22 may extend the full length of a side of the surface 21 or a portion of a side. The rod 22 extends in parallel with the surface 21 and may be oriented in any direction along the surface 21.

Fig. 2 illustrates the rod guide 1 mounted on a surface 21 of an openable element 2. The rod guide 1 comprises a first part 10 and a second part 11. The first part 10 encloses the second part 11. The second part 11 is movable within the first part 10.

The first part 10 has a mounting arrangement 5 for mounting the rod guide 1 to the surface 21 by a screw or a bolt. The mounting arrangement is illustrated at one side of the rod guide 1. In another embodiment there can be more than one mounting arrangement 5. The mounting arrangement 5 may be integrated in a portion of the first part 10 as seen in fig. 2 or the mounting arrangement 5 may be one or more flanges extending from a side of the first part.

The first part 10 has an opening suitable for interaction with the second part 11, for adjusting the position of the second part within the first part 10.

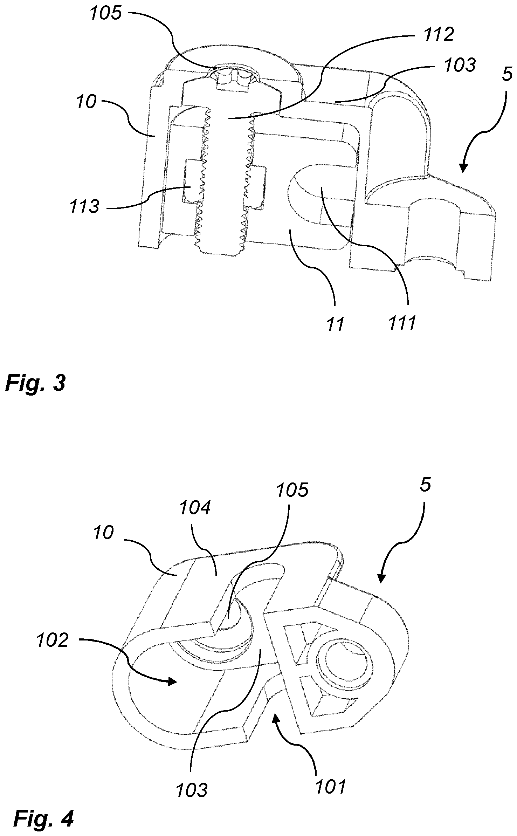

Fig. 3 is a cross-section of the rod guide illustrated in fig. 2. The second part 11 is enclosed by the first part 10.

The second part has a recess 111. The recess 111 limits movement of the rod in a direction perpendicular to the surface 21 when the rod guide 1 is mounted to the surface 21 of the openable element 2. When the second part 11 is arranged inside the first part 10, the opening of the recess 111 of the second part 11 is closed by an inner surface of the first part 10.

The height adjusting element 112 in this embodiment is a screw. The screw 112 is positioned inside of the first part 10 by an indentation in the first part 10 suitable for holding the screw head. However, the inside may be substantially flat or may have any other shape suitable for receiving the second part 10 and the height adjusting element 112, 113.

The height adjusting part 113 in this embodiment is a nut. The nut 113 is positioned within the second part 11. In another embodiment, the nut 113 may be integrated with the second part 11, provided as a threaded opening in the second part 11.

The screw 112 extends through a hole in the second part 11. The hole which the screw 112 is extending through intersects a hole wherein the nut 113 is positioned, or it intersects the portion where the nut 113 is integrated with the second part 11.

Fig. 4 illustrates the first part 10 of the rod guide 1 having at least one recess 101 according to one embodiment. The recess 101 limits radial movement of the rod 22 in a direction in parallel with the surface 21 when the rod guide 1 is mounted to the surface 21 of the openable element 2.

The first part 10 has sides enclosing an open space of the first part 10. The open space of the first part 10 can receive the second part 11 of the rod guide 1. A side 102 configured to be in parallel to and adjacent to a surface 21 of an openable element 2, can be open or partly open at least where the recess 101 is oriented. The side 102 is a bottom side of the first part 10, being formed by the surfaces and openings extending in a plane configured to coincide with the surface 21 of the openable element 2 when the rod guide 1 is arranged thereto. The first part 10 has a top portion 103. A lower side of the top portion 103 is facing the open or partly open side 102, which thereby may include facing the surface 21 of the openable element 2 when the rod guide 1 is arranged thereto. The top portion 103 may have an opening 105. The opening 105 may be suitable for reaching and rotating the height adjusting element 112 by hand or by a tool.

The recess 101 extends from a portion of the first part 10 which is adjacent to the surface 21 when the rod guide 1 is mounted to the surface 21 of the openable element 2, and along a side 104 of the first part 10 that is perpendicular to the surface 21 when mounted. The recess 101 may extend the full length of the side 104 or a portion of the side 104. The recess 101 may at least have the length about the same as the diameter of a rod 22. The recess 101 is open at an end of the first part 10 facing the surface 21 when mounted to the surface 21 of the openable element 2. The extension of the recess 101 may determine the limits of the adjustability of the position of the rod 22.

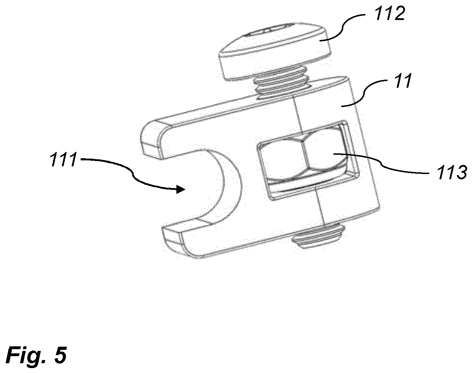

Fig. 5 illustrates the second part 11 of the rod guide 1 according to one embodiment. The recess 111 is U-shaped and extends from one side of the second part 11 and inwards at least a length corresponding to the diameter of the rod 22. The recess 111 is open in a direction perpendicular to the opening of the recess 101 when the second part 11 is enclosed by the first part 10. The recess 111 is open in a direction parallel with the surface 21 when the rod guide 1 is mounted to the surface 21.

The recess 111 creates a receptacle for holding the rod 22 in the position set by the rod guide 1. The recess 111 extends in a direction perpendicular to the direction in which the recess 101 of the first part 10 extends.

The second part 11 has a through hole for holding the height adjusting element 112. The through hole in the second part 11 extends in parallel with the recess 101 when the second part 11 is enclosed by the first part 10.

The second part 11 further has a space, or a second through hole, for holding the height adjusting element 113.

The space for holding the height adjusting element 113 intersects with the through hole for holding the height adjusting element 112 so that the height adjusting element 112 can pass through the height adjusting element 113. The height adjusting element 113 is threaded so as to be able to interact with threads of the height adjusting element 112. The height adjusting element 113 is further arranged in the second part 11 so as to be rotationally fixed.

In another embodiment, the height adjusting element 113 can be an integrated part of the second part 11.

To adjust the position of a rod 22 in a rod guide 1 , the height adjusting element 112 is rotated by hand or by a tool. The threads of the height adjusting element 112 will work along the threads of the height adjusting element 113, so as to move the height adjusting element 113 along the height adjusting element 112. The second part 11 will move together with the height adjusting element 113, and the position of the recess 111 will be changed, within the first part 10, in the direction of the movement of the height adjusting element 113. By such movement of the second part 11, a rod 22 arranged to the rod guide 1 and extending through the recesses 101, 111 will be moved in relation to the surface 21 of the openable element 2. The rod's distance to the surface 21 may be changed.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A rod guide (1) for a rod (22) arranged to an openable element (2), comprising:
a first part (10) configured to be arranged with a bottom side (102) onto a surface (21) of the openable element (2), and having at least one recess (101) extending, from an open end of the recess (101) at the bottom side (102) of the first part, in a direction perpendicular to the surface (21) of the openable element (2),
a second part (11) enclosed by the first part (10) and being movable relative to the first part (10) in a direction perpendicular to the surface (21), and having at least one recess (111) configured to create a receptacle for receiving the rod (22), wherein the recess (111) of the second part (11) has an open end in a direction in parallel with the surface (21) of the openable element (2) when the rod guide is arranged thereto, and
a height adjusting element (112, 113) configured to adjust the position of the second part (11) inside of the first part (10) along said direction,
wherein when moving the second part (11) by the height adjusting element (112, 113) the rod (22) received in the receptacle of the recess (111) of the second part (11) is moved along the recess (101) of the first part (10) in a direction perpendicular to the openable element (2).

2. The rod guide (1) according to claim 1, wherein the receptacle holding the rod (22), provided by the recess (101) of the first part (10) and the recess (111) of the second part (11), limits the movement of the rod (22) in at least two dimensions perpendicular to each other.

3. The rod guide (1) according to any of the preceding claims, wherein the recess (101) in the first part limits movement of the rod (22) in a direction in parallel with the surface (21), and
the recess (111) in the second part limits movement of the rod (22) in a direction perpendicular to the surface (21).

4. The rod guide (1) according to any of the preceding claims, wherein the height adjusting element (112) is configured to be arranged to the second part (11) and extending through the second part (11) in a direction perpendicular to the surface (21).

5. The rod guide (1) according to any of the preceding claims, wherein the second part (11) further comprises at least one through hole, and
wherein the height adjusting element (112) is arranged in the at least one through hole of the second part (11).

6. The rod guide (1) according to any of the preceding claims, wherein the height adjustable element (112, 113) is a screw or a bolt (112) and a nut (113).

7. The rod guide (1) according any of the preceding claims, wherein the first part (10) has an opening aligned with one end of the height adjusting element (112).

8. The rod guide (1) according to any of the preceding claims, wherein the first part (10) is mounted on the openable element (2) by at least one screw or bolt or other fastening means.

9. A method for adjusting the position of a rod (22) in a rod guide (1) according to any one of the preceding claims, the method comprising:
rotating the height adjusting element (112), such that the second part (11) is moved inside of the first part (10) in a direction perpendicular to the surface (21) of the openable element (2).

10. An openable element (2) comprising a rod (22) and at least one rod guide (1) according to any one of the claims 1-8 attached to a surface (21) of the openable element (2), wherein the rod extends through the rod guide (1).

## Patentansprüche

1. Stangenführung (1) für eine Stange (22), die an einem öffnungsfähigen Element (2) angeordnet ist, umfassend:
ein erstes Teil (10), das konfiguriert ist, um mit einer Unterseite (102) auf einer Oberfläche (21) des öffnungsfähigen Elements (2) angeordnet zu werden, und das mindestens eine Aussparung (101) aufweist, die sich von einem offenen Ende der Aussparung (101) an der Unterseite (102) des ersten Teils in einer Richtung senkrecht zur Oberfläche (21) des öffnungsfähigen Elements (2) erstreckt,
ein zweites Teil (11), das von dem ersten Teil (10) umschlossen ist und relativ zu dem ersten Teil (10) in einer Richtung senkrecht zu der Oberfläche (21) beweglich ist und mindestens eine Aussparung (111) aufweist, die konfiguriert ist, um eine Aufnahme zur Aufnahme der Stange (22) zu bilden, wobei die Aussparung (111) des zweiten Teils (11) ein offenes Ende in einer Richtung parallel zu der Oberfläche (21) des öffnungsfähigen Elements (2) aufweist, wenn die Stangenführung daran angeordnet ist, und
ein Höheneinstellelement (112, 113), das konfiguriert ist, um die Position des zweiten Teils (11) innerhalb des ersten Teils (10) entlang der genannten Richtung einzustellen,
wobei beim Bewegen des zweiten Teils (11) durch das Höheneinstellelement (112, 113) die in der Aufnahme der Aussparung (111) des zweiten Teils (11) aufgenommene Stange (22) entlang der Aussparung (101) des ersten Teils (10) in einer Richtung senkrecht zu dem öffnungsfähigen Element (2) bewegt wird.

2. Stangenführung (1) nach Anspruch 1, wobei die die Stange (22) haltende Aufnahme, die durch die Aussparung (101) des ersten Teils (10) und die Aussparung (111) des zweiten Teils (11) gebildet wird, die Bewegung der Stange (22) in mindestens zwei Dimensionen, die senkrecht zueinander stehen, begrenzt.

3. Stangenführung (1) nach einem der vorhergehenden Ansprüche, wobei die Aussparung (101) im ersten Teil die Bewegung der Stange (22) in einer Richtung parallel zur Oberfläche (21), und
die Aussparung (111) im zweiten Teil die Bewegung der Stange (22) in einer Richtung senkrecht zur Oberfläche (21) begrenzt.

4. Stangenführung (1) nach einem der vorhergehenden Ansprüche, wobei das Höheneinstellelement (112) konfiguriert ist, um an dem zweiten Teil (11) angeordnet zu werden und sich durch das zweite Teil (11) in einer Richtung senkrecht zur Oberfläche (21) zu erstrecken.

5. Stangenführung (1) nach einem der vorhergehenden Ansprüche, wobei das zweite Teil (11) ferner mindestens ein Durchgangsloch umfasst und
wobei das Höheneinstellelement (112) in dem mindestens einen Durchgangsloch des zweiten Teils (11) angeordnet ist.

6. Stangenführung (1) nach einem der vorhergehenden Ansprüche, wobei das Höheneinstellelement (112, 113) eine Schraube oder ein Bolzen (112) und eine Mutter (113) ist.

7. Stangenführung (1) nach einem der vorhergehenden Ansprüche, wobei das erste Teil (10) eine Öffnung aufweist, die mit einem Ende des Höheneinstellelements (112) ausgerichtet ist.

8. Stangenführung (1) nach einem der vorhergehenden Ansprüche, wobei das erste Teil (10) durch mindestens eine Schraube oder einen Bolzen oder ein anderes Befestigungsmittel an dem öffnungsfähigen Element (2) montiert ist.

9. Verfahren zum Einstellen der Position einer Stange (22) in einer Stangenführung (1) nach einem der vorhergehenden Ansprüche, das Verfahren umfassend:
Drehen des Höheneinstellelements (112), so dass das zweite Teil (11) innerhalb des ersten Teils (10) in einer Richtung senkrecht zur Oberfläche (21) des öffnungsfähigen Elements (2) bewegt wird.

10. Öffnungsfähiges Element (2) umfassend eine Stange (22) und mindestens eine Stangenführung (1) nach einem der Ansprüche 1-8, die an einer Oberfläche (21) des zu öffnenden Elements (2) angebracht ist, wobei sich die Stange durch die Stangenführung (1) erstreckt.

## Revendications

1. Guide-tige (1) pour une tige (22) agencée sur un élément ouvrant (2), comprenant :
une première partie (10) configurée pour être agencée avec un fond (102) sur une surface (21) de l'élément ouvrant (2), et ayant au moins un creux (101) s'étendant, d'une extrémité ouverte du creux (101) sur le fond (102) de la première partie, dans une direction perpendiculaire à la surface (21) de l'élément ouvrant (2),
une seconde partie (11) enfermée par la première partie (10) et étant mobile par rapport à la première partie (10) dans une direction perpendiculaire à la surface (21), et ayant au moins un creux (111) configuré pour créer un réceptacle pour recevoir la tige (22), dans lequel le creux (111) de la seconde partie (11) présente une extrémité ouverte dans une direction parallèle à la surface (21) de l'élément ouvrant (2) lorsque le guide-tige est agencé dessus, et
un élément d'ajustement de hauteur (112, 113) configuré pour ajuster la position de la seconde partie (11) à l'intérieur de la première partie (10) le long de ladite direction,
dans lequel lors du déplacement de la seconde partie (11) par l'élément d'ajustement de la hauteur (112, 113), la tige (22) reçue dans le réceptacle du creux (111) de la seconde partie (11) est déplacée le long du creux (101) de la première partie (10) dans une direction perpendiculaire à l'élément ouvrant (2).

2. Guide-tige (1) selon la revendication 1, dans lequel le réceptacle tenant la tige (22), fourni par le creux (101) de la première partie (10) et le creux (111) de la seconde partie (11), limite le mouvement de la tige (22) dans au moins deux dimensions perpendiculaires l'une à l'autre.

3. Guide-tige (1) selon l'une quelconque des revendications précédentes, dans lequel le creux (101) dans la première partie limite le mouvement de la tige (22) dans une direction en parallèle avec la surface (21), et
le creux (111) dans la seconde partie limite le mouvement de la tige (22) dans une direction perpendiculaire à la surface (21).

4. Guide-tige (1) selon l'une quelconque des revendications précédentes, dans lequel l'élément d'ajustement de la hauteur (112) est configuré pour être agencé sur la seconde partie (11) et s'étendant à travers la seconde partie (11) dans une direction perpendiculaire à la surface (21).

5. Guide-tige (1) selon l'une quelconque des revendications précédentes, dans lequel la seconde partie (11) comprend en outre au moins un trou traversant, et
dans lequel l'élément d'ajustement de la hauteur (112) est agencé dans l'au moins un trou traversant de la seconde partie (11).

6. Guide-tige (1) selon l'une quelconque des revendications précédentes, dans lequel l'élément d'ajustement de la hauteur (112, 113) est une vis ou un boulon (112) et un écrou (113).

7. Guide-tige (1) selon l'une quelconque des revendications précédentes, dans lequel la première partie (10) présente une ouverture alignée avec une extrémité de l'élément d'ajustement de la hauteur (112).

8. Guide-tige (1) selon l'une quelconque des revendications précédentes, dans lequel la première partie (10) est montée sur l'élément ouvrant (2) par au moins une vis ou un boulon ou autre moyen de fixation.

9. Procédé d'ajustement de la position d'une tige (22) dans un guide-tige (1) selon l'une quelconque des revendications précédentes, le procédé comprenant :
de faire tourner l'élément d'ajustement de la hauteur (112) de telle façon que la seconde partie (11) est tournée à l'intérieur de la première partie (10) dans une direction perpendiculaire à la surface (21) de l'élément ouvrant (2).

10. Élément ouvrant (2) comprenant une tige (22) et au moins un guide-tige (1) selon l'une quelconque des revendications 1-8 fixé à une surface (21) de l'élément ouvrant (2), dans lequel la tige s'étend à travers le guide-tige (1).
